# FASCICULE DE BREVET EUROPEEN

(11) **EP 2 834 462 B1**
(45) Date de publication et mention de la délivrance du brevet: **01.08.2018**
(21) Numéro de dépôt: 13722477.0
(22) Date de dépôt: 03.04.2013
(51) Int. Cl.: E21D 11/05, E21D 11/08, C04B 28/02, C04B 33/04, C04B 35/626, C04B 18/02

(54) **SYSTÈME ET PROCÉDÉ D'AMORTISSEMENT DE LA CONVERGENCE D'UN TERRAIN, PROCÉDÉ DE FABRICATION D'UN TEL SYSTÈME**
SYSTEM UND VERFAHREN ZUR ABSCHWÄCHUNG DER KONVERGENZ VON GELÄNDE UND VERFAHREN ZUR HERSTELLUNG SOLCH EINES SYSTEMS
SYSTEM AND METHOD FOR ATTENUATING THE CONVERGENCE OF TERRAIN, AND METHOD FOR MANUFACTURING SUCH A SYSTEM

(30) Priorité: 03.04.2012 FR 1200989; 03.04.2012 FR 1200988
(43) Date de publication de la demande: 11.02.2015
(73) Titulaire: Constructions Mécaniques Consultants, 38410 Vaulnaveys le Haut (FR); Agence Nationale pour la Gestion des Déchets Radioactifs, 92298 Châtenay-Malabry (FR)
(72) Inventeur: SIMON Emeric, F-38410 Vaulnaveys-le-Haut (FR)
(74) Mandataire: Talbot, Alexandre
(86) Numéro de dépôt international: PCT/FR2013/000087
(87) Numéro de publication internationale: WO 2013/150191

(56) Documents cités:
- EP-A1- 2 042 686
- DE-A1-102009 057 521
- FR-A- 593 877
- GB-A- 2 013 757
- JP-A- 60 126 499
- JP-A- 2009 002 027
- JP-A- 2012 122 198

## Description

### Domaine technique de l'invention

L'invention concerne l'amortissement de la convergence d'un terrain, et s'applique particulièrement aux tunnels souterrains.

### État de la technique

Dans le domaine des tunnels, une cavité est, en général, creusée sous terre, puis un tunnel est formé dans cette cavité en utilisant des voussoirs. Les voussoirs correspondent à des éléments constitutifs d'une voûte une fois assemblés entre eux. Lorsqu'on creuse la cavité dans le terrain, on modifie l'équilibre du terrain et celui-ci exerce des poussées plus ou moins intenses qui tendent à fermer la cavité ainsi créée, on appelle ce phénomène « la convergence du terrain ».

On peut dimensionner les voussoirs du tunnel de façon à empêcher l'affaissement du tunnel sous la poussée du terrain, mais lorsqu'on réalise le tunnel à une grande profondeur, l'épaisseur des voussoirs augmente considérablement. On peut également renforcer les voussoirs à l'aide d'étais reposant sur le fond du tunnel, mais ces systèmes sont difficiles à mettre en place et peuvent encombrer l'intérieur du tunnel. On peut encore recouvrir la paroi externe du tunnel par l'injection d'un produit tel du béton, ou à l'aide d'anneaux métalliques. Mais ces produits sont rigides et ne permettent pas d'absorber efficacement la convergence du terrain.

Dans le domaine de la réalisation des tunnels, les roches extraites, et en particulier l'argilite, sont généralement inutilisées. En particulier l'argilite stockée en plein air, et soumise aux intempéries telle que la pluie, n'est pas stable, car elle se dissout dans l'eau pour se transformer en boue. L'argilite sous forme de boue est particulièrement polluante car elle peut s'infiltrer dans les terrains agricoles et dans les canalisations domestiques. Lorsqu'on réalise des tunnels, on peut avoir besoin de stocker l'argilite.

Dans le milieu naturel, il existe différents types de roches argileuses, classées suivant leur teneur en argile et en autres minéraux (quartz, carbonates, sulfures, etc.) et suivant leur texture. L'argilite désigne une roche argileuse indurée, c'est-à-dire comprenant du mica, du carbonate de calcium (CaCO3) et/ou des cristaux de quartz, et dont la teneur en argile, principalement de la smectite et de l'illite, est d'environ 40 à 45 %. L'argilite est caractérisée par une très faible perméabilité.

On peut trouver de l'argilite en France, dans le bassin de Lodève du département de l'Hérault. On peut encore trouver de l'argilite dans le Bassin Parisien, en particulier dans le département de Haute-Marne.

Il est donc intéressant de fournir un matériau de construction, notamment un matériau de construction adapté à la réalisation des tunnels, et en particulier de fournir un procédé de fabrication d'un tel matériau.

### Objet de l'invention

Un objet de l'invention consiste à fournir un moyen pour amortir la convergence d'un terrain exercée sur un tunnel.

Un autre objet de l'invention est de fournir un matériau de construction, et en particulier un matériau adapté à la réalisation des tunnels.

Un autre objet de l'invention est de fournir un procédé de fabrication d'un tel matériau.

Selon un aspect, il est proposé un système d'amortissement de la convergence d'un terrain, comprenant un revêtement recouvrant en partie une paroi externe d'un tunnel formé par des voussoirs et situé à l'intérieur d'une cavité creusée dans le terrain.

Dans ce système, le revêtement comporte une pluralité de dispositifs munis chacun d'un trou débouchant.

Ainsi, on fournit un revêtement ayant des dispositifs à trou débouchant, de façon à créer un espace libre au sein du revêtement, noté volume résiduel, qui participe, notamment, à l'amortissement de la convergence du terrain. En particulier, la poussée du terrain a tendance à occuper le volume résiduel, c'est-à-dire le volume laissé inoccupé par les dispositifs, ce qui permet d'amortir la poussée. Grâce à de tels dispositifs, on offre un système qui permet de maintenir le tunnel en position par rapport à un axe longitudinal sensiblement centré du tunnel.

Le tunnel peut avoir une forme globalement tubulaire.

Le revêtement peut recouvrir entièrement la paroi externe du tunnel.

Ainsi on obtient une convergence isotrope du terrain en direction de la paroi externe du tunnel.

Le revêtement peut comprendre un volume de recouvrement égal à la somme entre un volume occupé par les dispositifs et un volume résiduel, le rapport entre le volume résiduel et le volume de recouvrement étant supérieur à 50%.

Les dispositifs peuvent être placés au sein du revêtement de manière aléatoire.

Ainsi on augmente le volume résiduel pour améliorer l'amortissement de la convergence du terrain.

Le revêtement peut comprendre une épaisseur sensiblement constante.

Selon un mode de réalisation, le terrain est meuble et les dispositifs sont partiellement noyés dans une partie du terrain meuble ayant fluée en direction de la paroi externe du tunnel.

Selon un autre mode de réalisation, le terrain est meuble et les dispositifs sont entièrement noyés dans une partie du terrain meuble ayant fluée en direction de la paroi externe du tunnel.

Selon encore un autre mode de réalisation, le terrain est rocheux et la résistance à la rupture des dispositifs est inférieure à une pression initiale de convergence du terrain rocheux exercée lorsque la cavité est formée, de façon à permettre l'écrasement des dispositifs.

Chaque dispositif peut avoir une forme globalement tubulaire ou une forme globalement annulaire.

Les dispositifs peuvent en outre être tous sensiblement identiques.

Selon un autre aspect, il est proposé un procédé d'amortissement de la convergence d'un terrain comprenant les étapes suivantes :
- former une cavité dans le terrain à l'aide d'un tunnelier ;
- former un tunnel dans la cavité à l'aide de voussoirs au fur et à mesure de l'avancement du tunnelier de façon à conserver un espace délimité entre une paroi externe du tunnel et une paroi interne de la cavité ; et
- injecter des dispositifs munis chacun d'un trou débouchant dans ledit espace délimité.

Selon encore un autre aspect de l'invention, il est proposé un procédé de fabrication d'un matériau de construction, comprenant une étape d'extraction de l'argilite sous terre, une étape de transformation de l'argilite extraite, et une étape de cuisson de l'argilite transformée.

L'étape de transformation peut comporter une étape de broyage de l'argilite extraite pour obtenir des fragments d'argilite.

Le procédé peut en outre comprendre une étape de calibration dans laquelle on sépare les fragments d'argilite selon au moins deux catégories en fonction de leurs tailles.

Le procédé peut également comprendre une étape d'élaboration d'une pluralité de dispositifs d'argilite munis chacun d'un trou débouchant, à partir de fragments d'argilite d'une première catégorie ayant une taille inférieure à une première taille de référence, et dans lequel on cuit les dispositifs d'argilite pour obtenir des dispositifs en céramique destinés à la réalisation d'un tunnel.

Le procédé peut comprendre une étape d'élaboration d'une pluralité de briques d'argilite à partir d'un mélange d'eau et de fragments d'argilite d'une première catégorie ayant une taille inférieure à une première taille de référence, et dans lequel on cuit les briques d'argilite pour obtenir des briques en céramique.

Dans le procédé, on peut cuire des fragments d'argilite d'une première catégorie ayant une taille inférieure à une première taille de référence, pour obtenir une poudre en céramique et on mélange la poudre en céramique avec un liant pour la réalisation d'un mortier ou d'un béton.

Dans le procédé, on peut également cuire des fragments d'argilite d'une deuxième catégorie ayant une taille supérieure à la première taille de référence et inférieure à une deuxième taille de référence, pour obtenir des granulats en céramique, et on mélange les granulats en céramique avec un liant pour la réalisation d'un béton.

Dans le procédé, on peut encore cuire des fragments d'argilite d'une troisième catégorie ayant une taille supérieure à la deuxième taille de référence, pour obtenir des graviers en céramique destinés à la réalisation d'un ballast de voie ferrée.

Selon un autre aspect de l'invention, il est proposé un matériau de construction comprenant de la céramique à base d'argilite, destiné à la réalisation d'un tunnel, ou de briques, ou d'un mortier, ou d'un béton, ou d'un ballast de voie ferrée.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 représente schématiquement un mode de réalisation de l'invention ;
- la figure 2 illustre schématiquement un mode de réalisation d'un dispositif à trou débouchant ;
- les figures 3 et 4 illustrent de façon schématique un autre mode de réalisation d'un dispositif à trou débouchant, la figure 4 étant une vue en coupe selon l'axe A-A de la figure 3 ;
- la figure 5 illustre schématiquement un état initial du système d'amortissement ;
- la figure 6 illustre schématiquement un état d'équilibre du système d'amortissement lorsque le terrain est meuble ;
- la figure 7 illustre schématiquement un état d'équilibre du système d'amortissement lorsque le terrain est rocheux ;
- la figure 8 illustre de façon schématique une vue en coupe d'un tunnelier réalisant un tunnel souterrain ;
- la figure 9 illustre schématiquement un agrandissement local de la figure 8 au niveau des moyens d'injection des dispositifs à trou débouchant ;
- la figure 10 illustre schématiquement une vue en coupe d'un autre tunnelier réalisant un tunnel souterrain ;
- la figure 11 illustre schématiquement un agrandissement local de la figure 10 au niveau des moyens d'injection des dispositifs à trou débouchant ; et
- la figure 12 représente les principales étapes d'un procédé de fabrication d'un matériau selon l'invention.

### Description détaillée

De manière générale, bien que la présente invention procure des avantages particuliers dans le domaine des tunnels, elle est aussi applicable à tout élément qui est réalisé dans une cavité souterraine et qui est configuré pour résister à la convergence du terrain, par exemple des réceptacles ou cuves partiellement ou totalement enterrés.

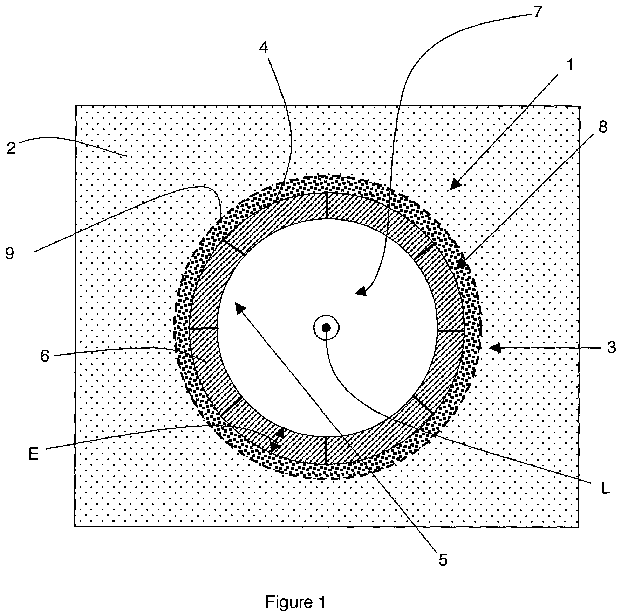

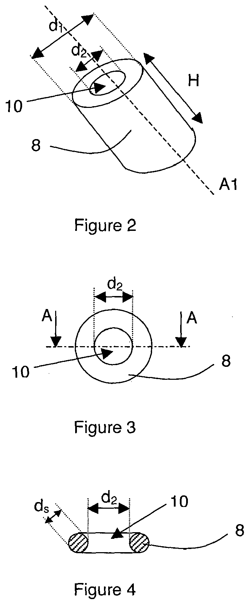

Sur la figure 1, on a représenté un système d'amortissement 1 de la convergence d'un terrain 2. Le système d'amortissement 1 comprend un revêtement 3 recouvrant en partie, ou entièrement, une paroi externe 4 d'un tunnel 5 formé par des voussoirs 6 et situé à l'intérieur d'une cavité 7 creusée dans le terrain 2. Le tunnel 5 peut être ouvert et avoir une forme de U renversé, il peut également être fermé et avoir une forme ovoïde, ou tout autre forme. Préférentiellement, le tunnel 5 a une forme globalement tubulaire. Le revêtement 3 comporte une pluralité de dispositifs 8 munis chacun d'un trou débouchant (illustré ultérieurement aux figures 2 à 4) et comporte une épaisseur référencée E. Une limite externe 9 du revêtement 3 est représentée par un trait en pointillés. Le revêtement 3 peut couvrir en partie la paroi externe 4 du tunnel 5, et préférentiellement le revêtement 3 recouvre entièrement le tunnel de manière à obtenir une convergence isotrope du terrain 2 vers la paroi externe 4 du tunnel 5. On a également représenté un axe longitudinal centré L du tunnel 5.

Les figures 2 à 4 illustrent deux dispositifs 8 pouvant être utilisés dans le revêtement 3 définit à la figure 1. Sur la figure 2, le dispositif 8 a une forme de tube comprenant un trou débouchant 10 correspondant à un évidemment selon un axe longitudinal A1 du tube. Le dispositif 8 peut également comprendre plusieurs trous débouchant, et préférentiellement chaque dispositif 8 comporte un unique trou débouchant pour faciliter sa réalisation. Avantageusement, chaque dispositif 8 en forme de tube a une hauteur H comprise entre 10 et 30mm, un diamètre extérieur d₁ compris entre 10 et 40mm et un diamètre intérieur d₂ compris entre 8 et 38mm. Préférentiellement, la hauteur H est égale au diamètre extérieur d₁, afin, notamment, d'obtenir un revêtement 3 ayant une épaisseur E sensiblement constante. Ces dimensions permettent aux dispositifs 8 tubulaires de supporter une charge importante calculée avant rupture.

Sur les figures 3 et 4, le dispositif 8 a la forme d'un anneau. De préférence, chaque dispositif 8 disposé au sein du revêtement 3 a cette forme d'anneau. L'anneau peut être torique et peut présenter une section circulaire comme illustré à la figure 4. Un anneau peut avoir un diamètre de tore dₛ compris entre 15 et 40mm et un diamètre intérieur minimum d₂ compris entre 10 et 30mm.

De préférence, les dispositifs (tubes ou anneaux) disposés au sein du revêtement sont tous sensiblement identiques afin d'obtenir un revêtement 3 homogène. Autrement dit, ils ne peuvent pas s'imbriquer les uns dans les autres. Le revêtement 3 comporte de préférence des dispositifs 8 ayant une forme globalement tubulaire car ils sont plus faciles à réaliser que les dispositifs 8 de forme globalement annulaire.

Les dispositifs 8 peuvent être réalisés en mortier, en argile cru, en céramique, ou en matière plastique, etc.

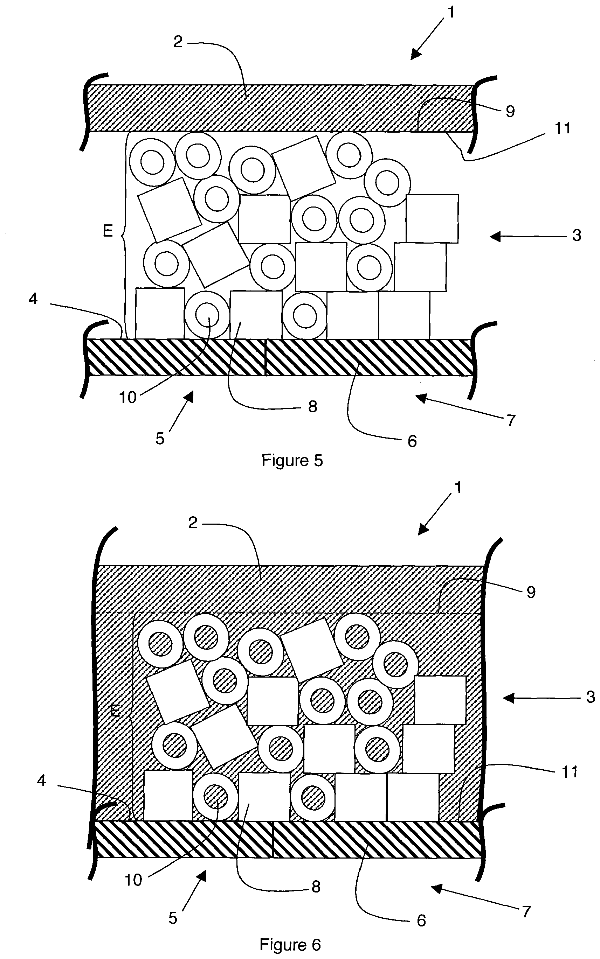

Sur la figure 5, on a représenté schématiquement un état initial du système d'amortissement 1. Lorsqu'on réalise le tunnel 5 au sein de la cavité 7 souterraine, on dispose les voussoirs 6 de manière à former la voûte du tunnel 5. Par ailleurs, on injecte entre la paroi externe 4 du tunnel 5 et le terrain 2, une pluralité de dispositifs 8 à trou débouchant tels que définis ci-avant, de manière à former le revêtement 3. Le revêtement 3 est alors disposé entre le terrain 2 et la paroi externe 4 du tunnel 5. Dans l'état initial, le revêtement 3 a une épaisseur générale E, qui est préférentiellement sensiblement constante le long de la paroi externe 4, et le terrain 2 présente une paroi interne 11, correspondant à la paroi interne de la cavité 7, qui repose en appui sur le revêtement 3, et qui est confondue avec la limite externe 9 du revêtement 3. De manière générale, les dispositifs 8 sont disposés au sein du revêtement 3 de manière aléatoire. Par « disposés de manière aléatoire», on entend que la disposition des dispositifs 8 n'est pas ordonnée, autrement dit les dispositifs 8 peuvent être désalignés, non coaxiaux, etc. Les dispositifs 8 occupent un volume, noté volume d'occupation, au sein du revêtement 3, et laisse un volume inoccupé, noté volume résiduel. Ainsi, le revêtement 3 comprend un volume de recouvrement égal à la somme entre le volume occupé par les dispositifs et le volume résiduel. Le rapport entre le volume résiduel et le volume de recouvrement est supérieur à 50%, préférentiellement entre 60% et 70%. La variation du rapport des volumes dépend de la disposition des dispositifs 8 au sein du revêtement 3. En d'autres termes, les dispositifs 8 prennent appui les uns sur les autres, et forment un revêtement 3 cohérent en contact avec la paroi externe 4. Afin de mettre en avant cette propriété, des tests ont été réalisés dans un réceptacle gradué à 500ml et à 1l. Lors d'un premier test, des dispositifs 8 munis chacun d'un trou débouchant 10 sous forme de tubes identiques ont été disposés dans le réceptacle jusqu'à la graduation de 500ml. Dans cette configuration, chaque dispositif 8 en forme de tube a une hauteur de 12mm, un diamètre intérieur de 9mm, et un diamètre extérieur de 11mm. Dans ce premier test, on a tout d'abord cherché à verser 500ml de liquide dans le réceptacle jusqu'à ce que la graduation de 500ml soit atteinte par le liquide. On s'est aperçu que lorsque la graduation de 500ml était atteinte, il restait encore 150ml de liquide non versé. Le taux de remplissage, c'est-à-dire le rapport entre le volume d'occupation et le volume résiduel, était alors égal à 70%. Dans un deuxième test, les dispositifs 8 sous forme de tube selon les dimensions citées ci-avant ont été mis dans le réceptacle de manière à atteindre la graduation de 1l, et on a cherché à verser 1l de liquide dans le réceptacle en s'arrêtant au niveau de la graduation 1l. Dans ce second exemple, il restait 350ml de liquide non versé. Le taux de remplissage était alors égal à 65%. Ceci a permis de mettre en exergue que le taux de remplissage restait sensiblement constant quel que soit le volume de recouvrement du revêtement 3.

De manière générale, le volume résiduel va permettre, notamment, d'amortir la convergence du terrain 2. En effet, dans l'état initial, le terrain 2 exerce une pression de convergence initiale sur le revêtement 3 et en direction de la paroi externe 4 du tunnel 5. Par pression de convergence du terrain 2, on entend les forces mises en oeuvre dans les mouvements d'un terrain au cours du temps. Du fait des mouvements du terrain 2, celui-ci va avoir tendance à converger vers la paroi externe 4 du tunnel 5. Ainsi, le revêtement 3 va permettre un rapprochement progressif de la paroi interne 11 du terrain 2 vers la paroi externe 4 du tunnel 5, jusqu'à ce que le terrain 2 occupe un état d'équilibre. Dans l'état d'équilibre, la pression de convergence est inférieure à la pression initiale. Le système d'amortissement 1 permet donc d'amortir la convergence du terrain jusqu'à un état d'équilibre pour lequel la pression de convergence est supportée par les voussoirs 6. En d'autres termes, en l'absence d'un système d'amortissement, il faut conformer les voussoirs 6 pour résister à la pression de convergence initiale du terrain. Le système d'amortissement 1 permet ainsi de diminuer l'épaisseur des voussoirs pour la réalisation des tunnels souterrains, et évite un endommagement des voussoirs 6. De part la nature du terrain 2, meuble ou rocheux, le système d'amortissement 1 se comporte différemment. On entend par terrain meuble, un terrain dont la pression de convergence est inférieure à la résistance de rupture des dispositifs 8 et dont la matière est apte à fluer dans et/ou entre les dispositifs 8. Par terrain rocheux, on entend un terrain dont la pression de convergence est supérieure à la résistance de rupture des dispositifs 8 et pour lequel les dispositifs 8 se brisent sous la pression, libérant un espace pour le terrain 2.

Dans le cas d'un terrain meuble, tel qu'illustré à la figure 6, le terrain 2 flue dans et/ou entre les dispositifs 8, jusqu'à atteindre un état d'équilibre dans lequel le terrain 2 est au contact, en partie ou entièrement, avec la paroi externe 4 du tunnel 5. Ainsi, dans l'état d'équilibre, la pression de convergence exercée par le terrain 2 sur la paroi externe 4 du tunnel 5 est inférieure à la pression de convergence initiale. Les dispositifs 8 permettent une convergence isotrope du terrain 2 vers la paroi externe 4 du tunnel 5. Ainsi, on homogénéise les forces appliquées par le terrain 2 sur le tunnel 5 afin de ne pas désaxer le tunnel par rapport à son axe longitudinal centré initial L. Sur la figure 6, on a illustré schématiquement l'état d'équilibre dans lequel les dispositifs 8 sont partiellement, ou entièrement, noyés dans la partie du terrain 2 qui a fluée en direction de la paroi externe 4. Selon une variante, les dispositifs 8 peuvent être, soit totalement noyés dans la matière du terrain 2, soit une première partie des dispositifs 8 est noyée dans la matière du terrain 2 et une deuxième partie des dispositifs 8 est noyée dans une laitance, c'est-à-dire un ciment délayé dans de l'eau, ou un mortier, pour figer l'assemblage. De préférence, les dispositifs 8 sont conformés de manière que leur résistance de rupture est supérieure à la pression de convergence du terrain 2. Autrement dit, les dispositifs 8 permettent de résister à la pression du terrain 2 sans se briser.

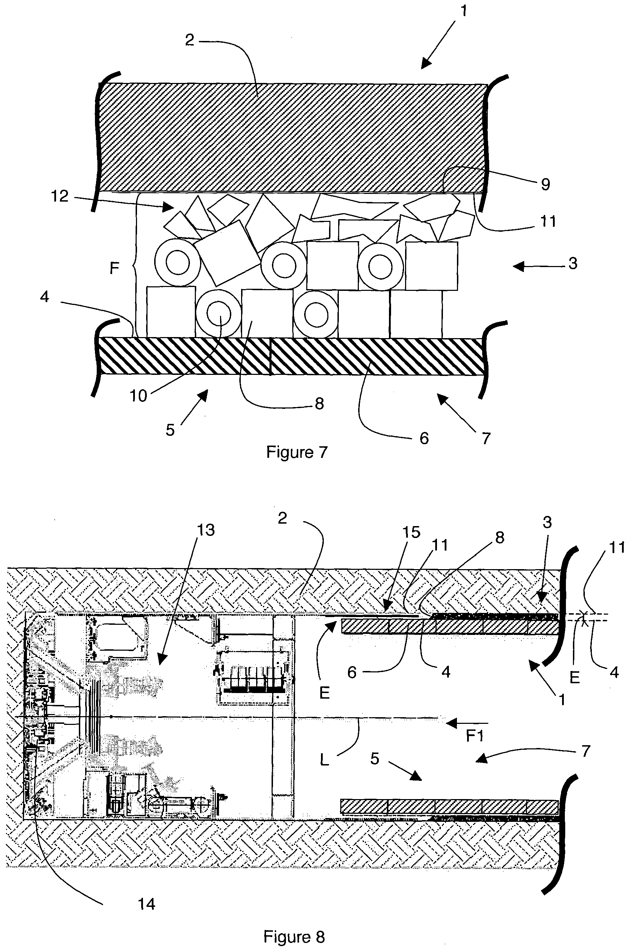

Dans le cas d'un terrain rocheux, tel qu'illustré à la figure 7, le terrain 2 a tendance à briser les dispositifs 8, jusqu'à atteindre un état d'équilibre dans lequel le terrain 2 est à une distance F, inférieure à l'épaisseur E initiale, de la paroi externe 4 du tunnel 5. La résistance à la rupture des dispositifs 8 est inférieure à la pression de convergence du terrain de façon à permettre l'écrasement des dispositifs. On a représenté par la référence 12 des dispositifs brisé. Autrement dit, les dispositifs 8 peuvent comprendre, tous ou certains d'entre eux, un état dans lequel ils sont brisés. Ceci permet d'absorber les déplacements du terrain rocheux sans endommager le tunnel 5.

Un tel système d'amortissement 1 peut être réalisé en utilisant un tunnelier 13. Le tunnelier 13 permet de forer la roche sous terre pour former la cavité 7, d'installer les voussoirs 6, puis de disposer les dispositifs 8 munis chacun d'un trou comme décrits ci-dessus entre les voussoirs 6 et la paroi interne 11 du terrain 2. Les dispositifs 8 peuvent être injectés entre la paroi externe 4 formée par les voussoirs 6 et la paroi interne 11, par tout procédé connu de l'homme du métier pour déplacer des pièces, par exemple par aspiration venturi, ou « air-lift » en langue anglaise.

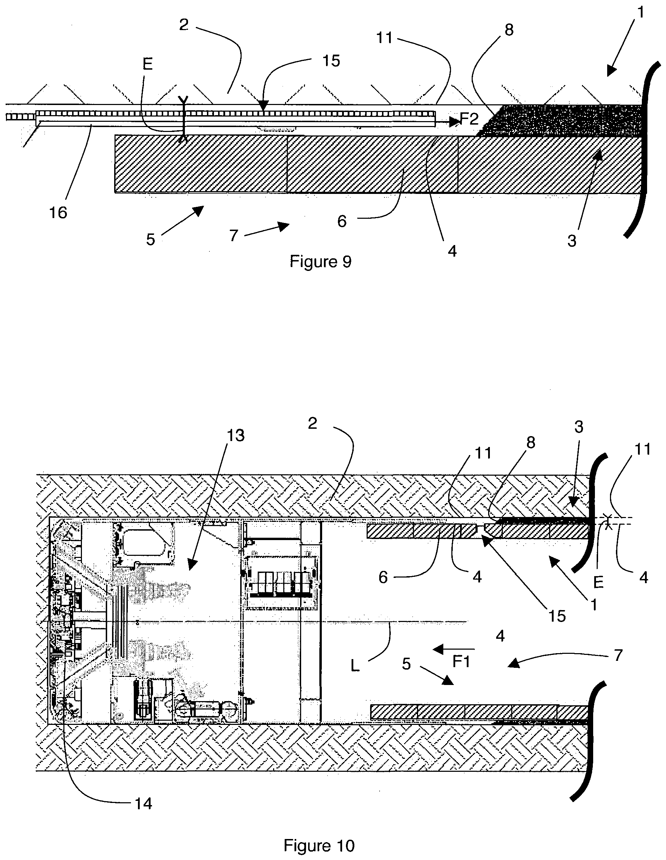

Les figures 8 et 9 illustrent schématiquement un tunnelier 13 en train de creuser une cavité 7 dans un terrain 2 selon la direction F1. L'avant du tunnelier 13 est équipé de moyens 14 assurant l'abattage de la roche du terrain 2. Ces moyens d'abattage 14 situés sur une extrémité du tunnelier 13, à la gauche des figures 8 et 9, peuvent comporter des têtes de forage. Bien que cela ne soit pas représenté, l'avant du tunnelier 13, équipé des moyens d'abattage 14, coopère avec des moyens d'extraction de la roche par exemple comme le marinage ou des convoyeurs (bande transporteuse). Une partie du tunnelier 13 assure la mise en place des voussoirs 6 au fur et à mesure de l'avancement du tunnelier 13 selon la direction F1. En outre, le tunnelier 13 comporte des moyens d'injection 15 pour injecter les dispositifs 8 munis chacun d'un trou débouchant, pour combler un espace d'épaisseur E délimité entre les voussoirs 6 et la paroi interne de la cavité 7 formée par l'avancement du tunnelier 13.

Dans le mode de mise en oeuvre illustré aux figures 8 et 9, les moyens d'injection 15 sont intégrés au tunnelier 13, c'est-à-dire que le tunnelier 13 comporte une partie arrière (aussi appelée bouclier du tunnelier) située entre les voussoirs 6 et la paroi interne 11 du terrain 2. Cette partie arrière comporte un tube 16 d'injection des dispositifs 8 formant en partie un système de convoyage par aspiration venturi. Le tube 16 étant solidaire du tunnelier 13, il avance au fur et à mesure du déplacement de façon à combler l'espace délimité entre les voussoirs 6 et la paroi interne 11 du terrain 2 au cours de la formation de la cavité 7. La flèche F2 de la figure 9 indique le chemin emprunté par les dispositifs 8 lors de leur injection.

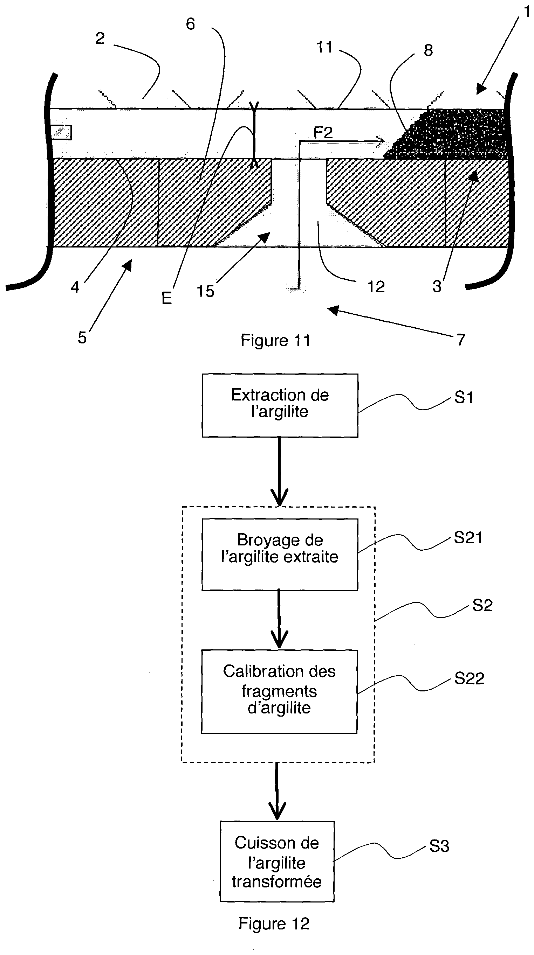

Dans le mode de réalisation des figures 10 et 11, les moyens d'injection 15 sont formés par des ouvertures pratiquées dans les voussoirs 6 de façon à coopérer avec un système de convoyage par aspiration venturi desdits dispositifs 8. Une fois que l'espace délimité est comblé par les dispositifs 8 jusqu'à une ouverture des voussoirs 6, ladite ouverture est colmatée, et le système de convoyage est déplacé au niveau d'une autre ouverture située en direction des moyens d'abattage 14 du tunnelier 13. Sur la figure 9, la flèche F2 indique le chemin emprunté par les dispositifs 8 lors de leur injection.

De manière générale, un procédé d'amortissement de la convergence d'un terrain 2 comprend les étapes suivantes :
- former une cavité 7 dans le terrain 2 à l'aide d'un tunnelier 13 ;
- former un tunnel 5 dans la cavité 7 à l'aide de voussoirs 6 au fur et à mesure de l'avancement du tunnelier 13 de façon à conserver un espace délimité entre une paroi externe 4 du tunnel 5 et une paroi interne 11 de la cavité 7 ; et
- injecter des dispositifs 8 munis chacun d'un trou débouchant dans ledit espace délimité.

L'injection des dispositifs permet, notamment, de maintenir le tunnel fixe selon l'axe longitudinal initial. Le maintien du tunnel peut être avantageusement amélioré du fait que l'espace à combler entoure le tunnel. Le fait d'entourer le tunnel de dispositifs permet d'une part de faire reposer le tunnel sur un lit de dispositifs et d'autre par d'obtenir une convergence isotrope du terrain dans lequel est disposé le tunnel.

Sur la figure 12, on a représenté les principales étapes d'un procédé de fabrication d'un matériau de construction, notamment un matériau de construction adapté à la réalisation du tunnel 5 défini ci-avant.

Le procédé de fabrication du matériau de construction comporte les étapes successives suivantes :
- extraire de l'argilite sous terre S1 ;
- transformer l'argilite extraite S2 ; et
- cuire l'argilite transformée S3.

Généralement, l'extraction de l'argilite peut être réalisée par tout système de forage ou d'extraction. En particulier l'argilite pourra être extraite du sol par le tunnelier 13 défini ci-avant. Après l'étape d'extraction, l'argilite est envoyée à une station de broyage S21 pour y être transformée, par exemple à l'aide d'un convoyeur se présentant sous la forme d'une bande de transport amenant l'argilite extraite jusqu'à un broyeur de la station de broyage. L'étape de broyage S21 permet d'obtenir des fragments d'argilite.

L'étape de cuisson S3 peut être mise en oeuvre en utilisant un four, par exemple en chauffant l'argilite à une température supérieure à 900°C, en particulier à 1050°C, pendant une période de vingt à trente-six heures, afin de transformer l'argilite en céramique. Dans un système intégré, à la sortie du broyeur, un autre convoyeur se présentant par exemple sous la forme d'une bande peut apporter les fragments d'argilite dans un four pour les cuire. La céramique obtenue est particulièrement stable, en particulier elle n'est pas soluble dans l'eau, et peut être stockée en évitant toute pollution.

L'étape de transformation S2 peut comprendre également une étape de calibration S22 pour séparer les fragments d'argilite en fonction de leurs tailles.

L'étape de calibration S22 comprend une séparation des fragments d'argilite en plusieurs catégories :
- une première catégorie dans laquelle les fragments ont une taille inférieure à une première taille de référence, pour obtenir une poudre d'argilite ;
- une deuxième catégorie dans laquelle les fragments ont une taille supérieure à la première taille de référence et inférieure à une deuxième taille de référence, pour obtenir des granulats d'argilite ; et
- une troisième catégorie dans laquelle les fragments ont une taille supérieure à la deuxième taille de référence pour obtenir des graviers d'argilite.
Par exemple, la première taille de référence est comprise entre 0,4 mm et 1 mm, préférentiellement égale à 0,5 mm. La deuxième taille de référence peut être comprise entre 5 mm et 50 mm, de préférence égale à 25 mm.

L'étape de calibration permet avantageusement de réutiliser par la suite les fragments d'argilite pour la fabrication de différents matériaux de construction destinés à des réalisations spécifiques.

Par exemple, on peut élaborer les dispositifs 8 munis chacun d'un trou débouchant, à partir de la poudre d'argilite, pour obtenir des dispositifs 8 d'argilite. On peut réaliser de tels dispositifs 8 d'argilite par extrusion.

Puis on cuit les dispositifs 8 d'argilite afin d'obtenir des dispositifs en céramique destinés, notamment, à la réalisation du revêtement 3 défini ci-avant. Un tel ensemble de dispositif 8 est particulièrement efficace pour amortir la convergence du terrain 2 exercée sur le tunnel 5.

Selon un autre exemple, on élabore une pâte à partir d'un mélange d'eau et de poudre d'argilite pour fabriquer des briques d'argilite. Puis, on cuit les briques d'argilite pour obtenir des briques en céramique.

Selon encore un autre exemple, on cuit directement la poudre d'argilite pour obtenir une poudre en céramique et mélanger cette dernière avec un liant, tel du ciment, pour la réalisation d'un mortier ou d'un béton.

Selon un autre exemple, on cuit les granulats d'argilite pour obtenir des granulats en céramique, et on mélange les granulats en céramique avec le liant pour réaliser le béton.

Selon encore un autre exemple, on cuit les graviers d'argilite pour obtenir des graviers en céramique pour la réalisation d'un ballast de voie ferrée.

Dans l'exemple particulier où l'argilite est extraite par le tunnelier 13, les fragments d'argilite pourront directement être utilisés sur place, en fonction de leurs tailles, pour réaliser, par exemple, les voussoirs 6 du tunnel 5 à partir du béton à base des granulats de céramique définis ci-avant. On peut aussi réaliser une dalle située à l'intérieur du tunnel 5 à partir d'un tel béton. Les briques de céramique pourront également être fabriquées sur place, puis être stockées directement dans le tunnel 5.

Ainsi, on peut disposer, directement au niveau de l'endroit où sera réalisé un tunnel enterré dans un sol comprenant de l'argilite, des matériaux de construction en céramique à base d'argilite en vue de leur réutilisation pour former, par exemple, au moins en partie le tunnel afin de limiter les déchets générés lors de la formation dudit tunnel.

## Revendications

1. Système d'amortissement de la convergence d'un terrain (2), comprenant un revêtement (3) recouvrant en partie une paroi externe (4) d'un tunnel (5) formé par des voussoirs (6) et situé à l'intérieur d'une cavité (7) creusée dans le terrain (2), **caractérisé en ce que** le revêtement (3) comporte une pluralité de dispositifs (8) munis chacun d'un trou débouchant (10), de façon à créer un espace libre au sein du revêtement.

2. Système selon la revendication 1, dans lequel le tunnel (5) a une forme globalement tubulaire.

3. Système selon la revendication 1 ou 2, dans lequel le revêtement (3) recouvre entièrement la paroi externe (4) du tunnel (5).

4. Système selon l'une des revendications 1 à 3, dans lequel le revêtement (3) comprend un volume de recouvrement égal à la somme entre un volume occupé par les dispositifs (8) et un volume résiduel, le rapport entre le volume résiduel et le volume de recouvrement étant supérieur à 50%.

5. Système selon l'une des revendications 1 à 4, dans lequel les dispositifs (8) sont placés au sein du revêtement (3) de manière aléatoire.

6. Système selon l'une des revendications 1 à 5, dans lequel le revêtement (3) comprend une épaisseur (E) sensiblement constante.

7. Système l'une des revendications 1 à 6, dans lequel le terrain (2) est meuble et les dispositifs (8) sont partiellement noyés dans une partie du terrain meuble ayant fluée en direction de la paroi externe (4) du tunnel (5).

8. Système l'une des revendications 1 à 6, dans lequel le terrain (2) est meuble et les dispositifs (8) sont entièrement noyés dans une partie du terrain meuble ayant fluée en direction de la paroi externe (4) du tunnel (5).

9. Système selon l'une des revendications 1 à 6, dans lequel le terrain (2) est rocheux et la résistance à la rupture des dispositifs (8) est inférieure à une pression de convergence initiale du terrain rocheux exercée lorsque la cavité (7) est formée, de façon à permettre l'écrasement des dispositifs (8).

10. Système selon l'une des revendications 1 à 8, dans lequel chaque dispositif (8) a une forme globalement tubulaire.

11. Système selon l'une des revendications 1 à 8, dans lequel chaque dispositif (8) a une forme globalement annulaire.

12. Système selon l'une des revendications 1 à 10, dans lequel les dispositifs (8) sont tous sensiblement identiques.

13. Procédé d'amortissement de la convergence d'un terrain comprenant les étapes suivantes :
- former une cavité (7) dans le terrain à l'aide d'un tunnelier (13) ;
- former un tunnel (5) dans la cavité (7) à l'aide de voussoirs (6) au fur et à mesure de l'avancement du tunnelier (13) de façon à conserver un espace délimité entre une paroi externe (4) du tunnel (5) et une paroi interne (11) de la cavité (7) ; et
- injecter des dispositifs (8) munis chacun d'un trou débouchant (10), de façon à créer un espace libre au sein du revêtement, dans ledit espace délimité.

## Patentansprüche

1. System zur Abschwächung der Konvergenz eines Geländes (2), das eine Beschichtung (3) umfasst, die zum Teil eine Außenwand (4) eines Tunnels (5) bedeckt, der von Gewölbesteinen (6) gebildet wird und innerhalb einer Vertiefung (7) angeordnet ist, die in das Gelände gegraben ist (2), **dadurch gekennzeichnet, dass** die Beschichtung (3) mehrere Vorrichtungen (8) umfasst, die jeweils mit einer mündenden Öffnung (10) versehen sind, sodass sie einen Freiraum in der Beschichtung schaffen.

2. System nach Anspruch 1, bei dem der Tunnel (5) im Wesentlichen röhrenförmig ist.

3. System nach Anspruch 1 oder 2, bei dem die Beschichtung (3) die Außenwand (4) des Tunnels (5) komplett bedeckt.

4. System nach einem der Ansprüche 1 bis 3, bei dem die Beschichtung (3) ein Deckvolumen umfasst, das gleich der Summe zwischen einem von den Vorrichtungen (8) eingenommenen Volumen und einem Restvolumen ist, wobei das Verhältnis zwischen dem Restvolumen und dem Deckvolumen über 50% beträgt.

5. System nach einem der Ansprüche 1 bis 4, bei dem die Vorrichtungen (8) innerhalb der Beschichtung (3) eine beliebige Anordnung haben.

6. System nach einem der Ansprüche 1 bis 5, bei dem die Beschichtung (3) eine im Wesentlichen konstante Dicke (E) aufweist.

7. System nach einem der Ansprüche 1 bis 6, bei dem das Gelände (2) lockeres Gelände Geist und die Vorrichtungen (8) zum Teil in einem Teil des lockeren Geländes versenkt sind, das sich in Richtung auf die Außenwand (4) des Tunnels (5) geschoben hat.

8. System nach einem der Ansprüche 1 bis 6, bei dem das Gelände (2) lockeres Gelände ist und die Vorrichtungen (8) komplett in einem Teil des lockeren Geländes versenkt sind, das sich in Richtung auf die Außenwand (4) des Tunnels (5) geschoben hat.

9. System nach einem der Ansprüche 1 bis 6, bei dem das Gelände (2) felsiges Gelände und der Bruchwiderstand der Vorrichtungen (8) geringer ist als ein Anfangskonvergenzdruck des felsigen Geländes, der ausgeübt wird, wenn die Vertiefung (7) hergestellt wird, sodass ein Zusammendrücken der Vorrichtungen (8) ermöglicht wird.

10. System nach einem der Ansprüche 1 bis 8, bei dem jede Vorrichtung (8) im Wesentlichen röhrenförmig ist.

11. System nach einem der Ansprüche 1 bis 8, bei dem jede Vorrichtung (8) im Wesentlichen ringförmig ist.

12. System nach einem der Ansprüche 1 bis 10, bei dem die Vorrichtungen (8) alle im Wesentlichen identisch sind.

13. Verfahren zum Abschwächen der Konvergenz eines Geländes, das folgende Schritte umfasst:
- Bildung einer Vertiefung (7) in dem Gelände mittels einer Tunnelbohrmaschine (13);
- Herstellung eines Tunnels (5) in der Vertiefung (7) mittels Gewölbesteinen (6) in dem Maße wie die Tunnelbaumaschine (13) vorankommt, in der Weise, dass ein begrenzter Raum zwischen einer Außenwand (4) des Tunnels (4) und einer Innenwand (11) der Vertiefung (7) erhalten bleibt; und
- Einbringen von Vorrichtungen (8), die jeweils mit einer mündenden Öffnung (10) versehen sind, um in dem begrenzten Raum einen Freiraum innerhalb der Beschichtung zu schaffen.

## Claims

1. Damping system of the convergence of a ground (2), comprising a coating (3) partially covering an outer wall (4) of a tunnel (5) formed by voussoirs (6) and situated inside a cavity (7) excavated in the ground (2), **characterized in that** the coating (3) comprises a plurality of devices (8) each provided with a pass-through hole (10) so as to create a free space within the coating.

2. System according to claim 1, wherein the tunnel (5) has a globally tubular shape.

3. System according to claim 1 or 2, wherein the coating (3) completely covers the outer wall (4) of the tunnel (5).

4. System according to one of claims 1 to 3, wherein the coating (3) comprises a covering volume equal to the sum between a volume occupied by the devices (8) and a residual volume, the ratio between the residual volume and the covering volume being greater than 50%.

5. System according to one of claims 1 to 4, wherein the devices (8) are placed in random manner inside the coating (3).

6. System according to one of claims 1 to 5, wherein the coating (3) comprises a substantially constant thickness (E).

7. System according to one of claims 1 to 6, wherein the ground (2) is loosely packed and the devices (8) are partially sunk in a part of the loosely packed ground that crept in the direction of the outer wall (4) of the tunnel (5).

8. System according to one of claims 1 to 6, wherein the ground (2) is loosely packed and the devices (8) are completely sunk in a part of the loosely packed ground that crept in the direction of the outer wall (4) of the tunnel (5).

9. System according to one of claims 1 to 6, wherein the ground (2) is rocky and the breaking strength of the devices (8) is lower than an initial convergence pressure of the rocky ground exerted when the cavity (7) is formed, so as to enable the devices (8) to be crushed.

10. System according to one of claims 1 to 8, wherein each device (8) has a globally tubular shape.

11. System according to one of claims 1 to 8, wherein each device (8) has a globally annular shape.

12. System according to one of claims 1 to 10, wherein the devices (8) are all substantially identical.

13. Method for damping the convergence of a ground comprising the following steps:
- forming a cavity (7) in the ground by means of a tunnel boring machine (13);
- forming a tunnel (5) in the cavity (7) by means of voussoirs (6) as the tunnel boring machine (13) progressively advances so as to preserve a space delineated between an outer wall (4) of the tunnel (5) and an inner wall (11) of the cavity (7); and
- injecting devices (8) each provided with a pass-through hole (10), so as to create a free space within the coating, in said delineated space.
